# FASCICULE DE BREVET EUROPEEN

(11) **EP 0 692 755 B1**
(45) Date de publication et mention de la délivrance du brevet: **05.02.1997**
(21) Numéro de dépôt: 95401625.9
(22) Date de dépôt: 06.07.1995
(51) Int. Cl.: G05D 7/01, F16K 47/04, F16K 31/363

(54) **Dispositif de régulation automatique du débit d'un circuit alimenté par un fluide à pression variable**
Automatische Durchflussregeleinrichtung für einen hydraulischen Kreis, der mit einem Fluid variablen Drucks beaufschlagt wird
Automatic flow control device for a hydraulic circuit fed with a variable pressure fluid

(30) Priorité: 13.07.1994 FR 9408710
(43) Date de publication de la demande: 17.01.1996
(73) Titulaire: ETAT FRANCAIS Représenté par le Délégué Général pour l'Armement, 75007 Paris 7ème (FR)
(72) Inventeur: Humbert, Michel, F-56700 Hennebont (FR); Le Coeur, Gérard, F-50690 Martinvast (FR)

(56) Documents cités:
- CH-A- 494 357
- DE-A- 2 115 290
- FR-A- 2 257 830
- GB-A- 1 445 898
- US-A- 4 364 409
- US-A- 4 694 852
- US-A- 5 227 062
- US-A- 5 230 367

## Description

Le secteur technique de la présente invention est celui des dispositifs régulateurs de débit pour un circuit alimenté par un fluide à pression variable. Ces dispositifs génèrent une perte de charge importante de manière silencieuse et autonome, sans apport d'énergie externe, avec une régulation de débit quelle que soit la pression en amont de ceux-ci. Ce type de dispositif est plus particulièrement destiné à être monté sur le circuit d'admission d'eau de mer d'un sous-marin.

Dans ce domaine technique on connaît notamment le brevet FR-A-2 678 041 qui décrit un limiteur de débit pour fluide liquide à pression variable. Ce limiteur, raccordé à une tuyauterie, est constitué d'un corps tubulaire contenant un actionneur mobile axialement à l'intérieur du corps, d'une position fermée présentant une section de passage du fluide quasi nulle à une position ouverte ayant une section de passage maximale. L'actionneur mobile comporte plusieurs portées circulaires disposées en face de rainures pratiquées dans le corps tubulaire, constituant des étages de détente à travers lesquels se produit un écoulement annulaire du fluide. Cet actionneur comporte également une cloison qui sépare le volume interne en deux chambres à volume variable communiquant entre elles. Les déplacements de l'actionneur sont commandés par la pression amont du circuit et régulés par des ressorts, l'étanchéité dynamique et le guidage des pièces en mouvement étant assurés par plusieurs joints et des segments de guidage.

Ce limiteur de débit, lourd et encombrant, présente un certain nombre d'inconvénients.

Le déplacement axial des différentes pièces en mouvement nécessite l'utilisation de joints assurant l'étanchéité dynamique en présence d'eau de mer. A plus ou moins long terme, ces joints souffrent de l'abrasion due aux particules en suspension dans l'eau de mer (grains de sables...), ce qui provoque des problèmes mécaniques tels que des pertes d'étanchéité ou des coincements des parties mobiles du limiteur de débit.

De plus, la régulation par ressorts des mouvements de l'actionneur entraîne un déplacement par saccades et non linéaire, pouvant rendre ce limiteur bruyant à certaines pressions du fluide.

Un autre inconvénient réside dans la complexité du réglage débit-pression qui s'effectue par remplacement des ressorts. Ceux-ci étant répartis autour de l'axe central du limiteur de débit, ces réglages de mise au point nécessitent, à chaque configuration, un démontage long et délicat du limiteur.

De plus, les coûts de fabrication de ce type de limiteurs de débit sont très élevés.

On connaît également le brevet US-A-5 227 062 qui décrit un dispositif de réglage de débit, connecté à un système de séparation d'un fluide sous pression, comportant notamment deux plaques superposées percées de plusieurs orifices disposées radialement à l'intérieur d'un corps tubulaire où circule le fluide, l'une d'elles étant fixe et l'autre mobile. Le réglage du débit est obtenu par le positionnement relatif des plaques qui conditionne l'alignement ou le désalignement des orifices. Le déplacement de la plaque mobile peut être réalisé de façon manuelle ou automatique. Pour un déplacement automatique, on utilise une source hydraulique ou pneumatique externe télécommandée, qui crée une pression sur un piston radial agissant sur cette plaque.

L'inconvénient majeur de ce type de dispositif réside dans l'indépendance de la source hydraulique ou pneumatique externe, qui commande le déplacement de la plaque mobile et donc le réglage du débit, avec les variations de pression du fluide en amont du dispositif. Ainsi, ce dispositif ne peut assurer de manière autonome, la régulation automatique du débit d'un circuit alimenté par un fluide à pression variable.

Le but de la présente invention est de remédier aux inconvénients rappelés ci-dessus en proposant un dispositif régulateur de débit peu encombrant, ayant un fonctionnement automatique et silencieux par déplacement linéaire des pièces en mouvement, commandé par la pression du fluide en amont.

Un autre but de l'invention est de simplifier les opérations de réglage débit-pression de chaque dispositif utilisé, en facilitant l'accès aux ressorts destinés à cet effet sans avoir à démonter les autres parties du dispositif.

La présente invention a également pour but de minimiser les perturbations de l'écoulement du fluide dans le dispositif pour éviter la formation de phénomènes de cavitation dans le fluide et donc de bruit dans l'ensemble du circuit.

Un autre but est de supprimer les risques de coincement des pièces mobiles, en utilisant des joints statiques et non dynamiques sources de nombreux problèmes mécaniques en présence d'eau de mer.

Pour ce faire, l'invention a pour objet un dispositif de régulation automatique du débit d'un circuit alimenté par un fluide à pression variable, du type comprenant un corps tubulaire raccordé au circuit et comportant au moins un moyen mécanique radial générant des pertes de charge d'une valeur proportionnelle à la pression du fluide en amont de ce moyen, ce moyen mécanique étant mobile radialement à l'intérieur du corps tubulaire, sous l'effet d'un piston placé dans une ouverture pratiquée dans le corps tubulaire et actionné par la pression du fluide, dispositif caractérisé en ce que le piston comporte un élément élastique se déformant progressivement sous l'effet des variations de pression du fluide, pour entraîner le passage dudit moyen d'une position ouverte laissant circuler le fluide dans le corps, à une position fermée limitant la circulation de celui-ci.

L'élément élastique peut être constitué d'un fourreau solidarisé d'une part avec la périphérie d'une partie centrale du piston et d'autre part avec la paroi de l'ouverture.

Selon un mode préféré de réalisation, l'élément élastique est réalisé en élastomère et la partie centrale du piston en matériau métallique.

De préférence, le moyen mécanique générant les pertes de charge est constitué de deux plaques circulaires adjacentes et percées de plusieurs trous, l'une des plaques étant fixée radialement sur la surface interne du corps tubulaire et l'autre, reliée à la partie centrale du piston, coulisse sur la précédente.

Le dispositif peut comporter un ressort à tension réglable logé dans la partie centrale du piston, prenant appui sur le fond de cette partie et sur le couvercle du piston, pour ajuster la superposition des trous respectifs des deux plaques en fonction des pertes de charges recherchées.

Selon une variante de réalisation préférée, l'élément élastique et la partie centrale du piston sont logés dans un manchon métallique fixé sur la surface externe du corps et communiquant avec l'ouverture, la partie centrale étant reliée à la plaque mobile par une tige métallique.

Le dispositif de régulation objet de la présente invention peut comporter plusieurs étages de régulation répartis sur la longueur du corps tubulaire, le nombre d'étages de régulation étant déterminé en fonction de la perte de charge à réaliser de manière silencieuse, chacun d'eux comprenant notamment un moyen mécanique générant des pertes de charge commandé par un piston.

Ce dispositif de régulation de débit silencieux et automatique présente l'avantage d'être purement mécanique et totalement autonome, ce qui est un gage de fiabilité dans les installations en environnement marin.

Le déplacement radial dans le corps tubulaire, de l'ensemble des éléments mis en oeuvre dans ce dispositif de régulation, présente l'avantage de limiter les perturbations de l'écoulement du fluide dans le corps tout en assurant une bonne efficacité du dispositif en présence d'un fluide ayant une pression amont élevée.

Un autre avantage du présent dispositif réside dans la simplicité et fiabilité de son fonctionnement, même en présence de grains de sable en suspension dans l'eau de mer par exemple.

Les éléments constitutifs en nombre limité et réalisés en matériaux classiques, rendent les coûts de fabrication de l'ensemble du dispositif faibles.

Ce dispositif fournit avantageusement un débit important et constant, quelle que soit l'immersion du sous-marin, afin de régler rapidement sa stabilité.

D'autres caractéristiques et avantages de l'invention apparaîtront dans la description détaillée, non limitative, d'un mode de réalisation de l'invention.

Cette description sera faite en se reportant aux dessins annexés parmi lesquels :
- la figure 1 représente une vue en coupe longitudinale schématique d'un étage de régulation de débit en position d'ouverture maximale d'un dispositif selon l'invention, correspondant à une pression amont nulle du fluide,
- la figure 2 représente une vue en coupe longitudinale, semblable à celle de la figure 1, de deux étages successifs de régulation en position de fermeture intermédiaire, en présence d'un fluide sous pression amont non nulle.

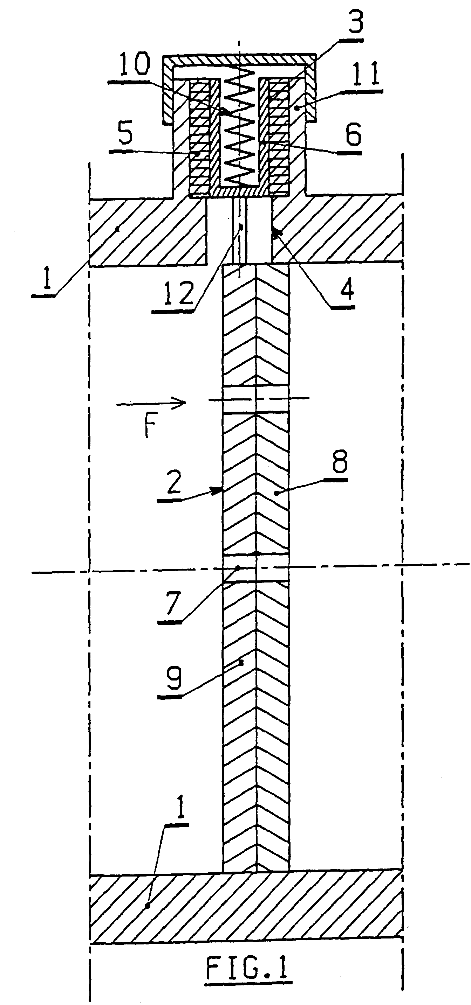

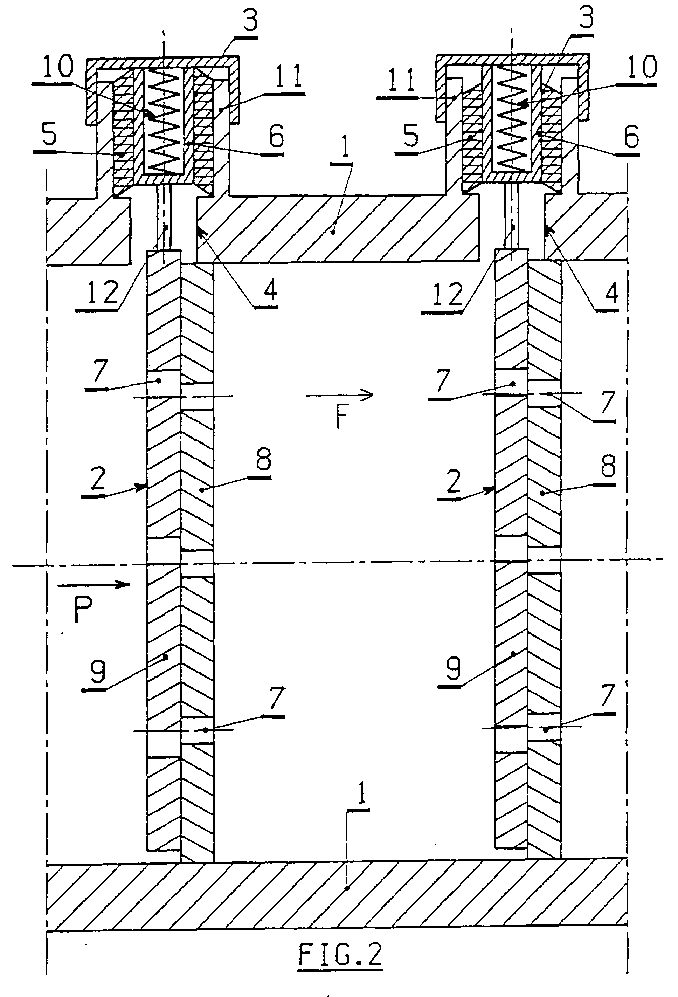

En référence aux figures 1 et 2, on voit un dispositif de régulation automatique du débit d'un circuit alimenté par un fluide à pression variable. Il est constitué d'un corps tubulaire 1 muni à ses deux extrémités d'une bride (non représentée) ou tout moyen équivalent, permettant de le raccorder de manière étanche au circuit afin de limiter son débit sous perte de charge.

Le fluide véhiculé est de l'eau de mer non filtrée, par exemple. Le fluide circule à l'intérieur du corps dans le sens de la flèche F.

Le corps tubulaire 1 comprend plusieurs étages identiques de régulation de débit qui fractionnent la détente, également répartis sur toute la longueur du corps. Le nombre d'étages est calculé de façon à ne pas provoquer de cavitation et donc de bruit dans le circuit.

Pour chaque étage de régulation, le corps présente une ouverture 4, généralement circulaire, pratiquée dans sa paroi. A l'intérieur du corps, est disposé, suivant un axe radial et à proximité de chaque ouverture 4, un moyen mécanique 2 générant des pertes de charge en fonction de la pression P du fluide en amont de chaque moyen 2. Celui-ci est constitué de deux plaques 8 et 9 adjacentes de forme sensiblement circulaire percées de plusieurs trous 7. La circonférence de la plaque inférieure 8 est fixée sur la surface interne du corps 1 par tout moyen connu, soudage par exemple. La plaque supérieure 9, mobile en translation sur la plaque fixe 8, est reliée, à travers l'ouverture 4, à la partie centrale 6 d'un piston 3 par l'intermédiaire d'une tige métallique 12. La partie centrale 6 du piston est logée dans un manchon métallique 11 généralement cylindrique fixé sur la surface externe du corps, au niveau de l'ouverture 4.

En position d'ouverture maximale (figure 1), les trous 7 de la plaque supérieure 9 arrivent au droit de ceux de la plaque inférieure 8.

La partie centrale 6, présentant en coupe la forme d'un U, contient un ressort 10 prenant appui respectivement sur le fond de la partie centrale 6 et sur le couvercle du piston 3. La tension du ressort 10 est réglable en vissant ou dévissant progressivement le couvercle du piston 3 sur le manchon métallique 11.

Le piston 3 comporte un élément élastique 5 constitué d'un fourreau en matériau élastique du type élastomère, logé entre la partie centrale 6 du piston et le manchon métallique 11. Ce fourreau élastique 5 est solidarisé par collage par exemple, avec la périphérie de la partie centrale d'une part, et avec la surface interne du manchon métallique 11 d'autre part.

Cet ensemble, associant la partie centrale 6, le fourreau 5 et le manchon 11, constitue un lamifié métal-élastomère qui fait office de vérin se déplaçant lorsque la pression en amont P du fluide varie.

On notera que la présente invention prévoit également la possibilité de réaliser ce dispositif de régulation en supprimant le manchon métallique 11 et la tige 12, le fourreau 5 en élastomère est alors logée directement entre la partie centrale 6 et la paroi de l'ouverture 4, la plaque mobile 9 étant ainsi solidarisée avec le fond de la partie centrale 6 du piston 3.

Les matériaux constituants l'ensemble du dispositif sont inoxydables et résistants à l'érosion.

Le fonctionnement du dispositif de régulation automatique de débit est le suivant.

Le dispositif étant raccordé à une tuyauterie d'un circuit alimenté par de l'eau de mer non filtrée à la pression d'immersion d'un sous-marin, l'eau pénètre dans le corps tubulaire 1 et rencontre le premier étage de régulation de débit qui va générer une première perte de charge en fonction de la pression P en amont, cette pression étant conditionnée notamment par la profondeur d'immersion du sous-marin.

Si la pression P est nulle ou faible aucune force ne s'exerce sur le piston 3, le moyen mécanique 2 conserve donc sa position initiale d'ouverture maximale laissant passer librement l'eau par les trous 7 alignés des deux plaques 8 et 9.

Lorsque la pression P augmente, la force correspondante pousse le lamifié vers l'extérieur en agissant notamment sur le fond de la partie centrale 6 du piston 3, entraînant ainsi une déformation progressive de l'élément élastique 5 constitué d'un fourreau en élastomère.

Le déplacement de la partie centrale du piston et la déformation du fourreau, conditionnés par la raideur prédéterminée du lamifié et du ressort 10, entraîne la translation de la plaque mobile 9 sur la plaque fixe 8 (figure 2).

Cette translation relative des deux plaques 8 et 9 provoque un chevauchement des trous 7 des plaques et diminue ainsi la section de passage, pour obtenir une perte de charge proportionnelle à la pression amont P.

Quand la pression P diminue, le fourreau élastique 5 reprend progressivement sa forme initiale et le moyen mécanique 2 revient en position d'ouverture maximale.

Pour les étages de régulation suivants, le fonctionnement est identique.

La tension des ressorts 10 et le diamètre des trous 7 des plaques pourront être différents d'un étage à l'autre, suivant la perte de charge par étage et le débit recherchés.

L'utilisation de lamifiés métal-élastomère permet d'avoir un fonctionnement souple et un déplacement linéaire des éléments mobiles, en s'affranchissant des problèmes de frottement et d'érosion de joints frottants, dus à la présence de particules en suspension dans l'eau de mer.

## Revendications

1. Dispositif de régulation automatique du débit d'un circuit alimenté par un fluide à pression variable, du type comprenant un corps tubulaire (1) raccordé au circuit et comportant au moins un moyen mécanique (2) radial générant des pertes de charge d'une valeur proportionnelle à la pression (P) du fluide en amont de ce moyen, ce moyen mécanique étant mobile radialement à l'intérieur du corps tubulaire, sous l'effet d'un piston (3) placé radialement dans une ouverture (4) pratiquée dans le corps tubulaire (1) et actionné par la pression (P) du fluide, dispositif caractérisé en ce que le piston (3) comporte un élément élastique (5) se déformant progressivement sous l'effet des variations de pression (P) du fluide, pour entraîner le passage dudit moyen d'une position ouverte laissant circuler le fluide dans le corps, à une position fermée limitant la circulation celui-ci.

2. Dispositif selon la revendication 1, caractérisé en ce que l'élément élastique (5) est constitué d'un fourreau solidarisé d'une part avec la périphérie d'une partie centrale (6) du piston et d'autre part avec la paroi de l'ouverture (4).

3. Dispositif selon la revendication 2, caractérisé en ce que l'élément élastique (5) est réalisé en élastomère et la partie centrale (6) du piston en matériau métallique.

4. Dispositif selon l'une quelconque des revendications précédentes, caractérisé en ce que le moyen mécanique (2) est constitué de deux plaques circulaires (8,9) adjacentes et percées de plusieurs trous (7), l'une (8) des plaques étant fixée radialement sur la surface interne du corps tubulaire (1) et l'autre (9), reliée à la partie centrale (6) du piston (3), coulisse sur la précédente (8).

5. Dispositif selon la revendication 4, caractérisé en ce qu'il comporte un ressort (10) à tension réglable logé dans la partie centrale (6) du piston (3), prenant appui sur le fond de cette partie et sur le couvercle du piston, pour ajuster la superposition des trous (7) respectifs des deux plaques en fonction des pertes de charges recherchées.

6. Dispositif selon la revendication 5, caractérisé en ce que l'élément élastique (5) et la partie centrale (6) du piston sont logés dans un manchon métallique (11) fixé sur la surface externe du corps (1) et communiquant avec l'ouverture (4), la partie centrale étant reliée à la plaque mobile (9) par une tige métallique (12).

7. Dispositif de régulation, caractérisé en ce qu'il comporte un nombre d'étages de régulation déterminé en fonction de la perte de charge à réaliser de manière silencieuse, répartis sur la longueur du corps tubulaire (1), chacun d'eux comportant un moyen mécanique (2) commandé par un piston (3), selon l'une quelconque des revendications précédentes.

## Claims

1. A device for automatically controlling the flow of a circuit fed by a fluid with variable pressure, of the type comprising a tubular body 1 connected to the circuit and comprising at least a radial mechanical means 2 generating load losses with a value proportional to pressure P of this fluid upstream of this means, this mechanical means being radially movable inside the tubular body, due to piston 3 radially located in an opening 4 made in tubular body 1 and actuated by pressure P of the fluid, a device characterised in that piston 3 comprises an elastic means 5 being progressively deformed due to the variations of fluid pressure P, resulting in the passage of the said means from an open position allowing the circulation of the fluid in the body, to a closed position limiting the circulation of the latter.

2. A device according to claim 1, characterised in that elastic element 5 comprises a sheath solid with both the periphery of a central part 6 of the piston and with the wall of opening 4.

3. A device according to claim 2, characterised in that elastic element 5 is made of elastomere and central part 6 of the piston is made of metallic material.

4. A device according to any of the previous claims, characterised in that mechanical means 2 comprises two adjacent circular plates 8 and 9 and with several drilled holes 7, one of the plates 8 being radially fixed on the internal surface of tubular body 1 and the other one 9, being connected to central part of piston 3, slides on the previous one 8.

5. A device according to claim 4, characterised in that it comprises a spring 10 with an adjustable tension located in central part 6 of piston 3, resting on the bottom of this part and on the piston cover, in order to adjust the superposition of respective holes 7 of both plates depending on the load losses wanted.

6. A device according to claim 5, characterised in that elastic element 5 and central part 6 of the piston are located in a metallic sleeve 11 fixed on the external surface of body 1 and communicating with opening 4, the central part being connected to movable plate 9 by a metallic rod 12.

7. A controlling device, characterised in that it comprises a number of controlling stages determined according to the load loss to be achieved in a silent way, distributed all along the tubular body 1, each of them comprising a mechanical means 2 controlled by a piston 3, according to any of the previous claims.

## Patentansprüche

1. Vorrichtung zur automatischen Regelung der Durchflußleistung einer mit einer Flüssigkeit mit schwankendem Druck versorgten Leitung, bestehend aus einem an die Leitung angeschlossenen röhrenförmigen Körper (1) und mit mindestens einer mechanischen radialen Einrichtung (2) ausgestattet, welche die Druckabfälle proportional zum Druck (P) der vor dieser Einrichtung anliegenden Flüssigkeit erzeugt, wobei sich diese mechanische Einrichtung im Inneren des röhrenförmigen Körpers unter der Wirkung eines radial in einer Öffnung (5) des röhrenförmigen Körpers (1) angebrachten und vom Druck (P) der Flüssigkeit betrieben Kolbens radial bewegt. Diese Vorrichtung ist dadurch *gekennzeichnet,* daß der Kolben (3) ein elastisches Element (5) enthält, welches sich progressiv unter der Wirkung der Druckschwankungen (P) der Flüssigkeit verformt, um den Übergang dieser Einrichtung von der Öffnungslage, welche die Strömung der Flüssigkeit im Körper ermöglicht, in die Schließlage, welche die Strömung der Flüssigkeit im Körper begrenzt, zu bewirken.

2. Vorrichtung nach Patentanspruch 1, dadurch gekennzeichnet, daß das elastische Element (5) aus einer einerseits mit der Peripherie eines mittleren Teils (6) des Kolbens, und andererseits mit der Wand der Öffnung (4) fest verbundenen Hülse besteht.

3. Vorrichtung nach Patentanspruch 2, dadurch gekennzeichnet, daß das elastische Element (5) aus Elastomer und der mittlere Teil (6) des Kolbens aus Metall gefertigt sind.

4. Vorrichtung nach irgendeinem der vorstehenden Patentansprüche, dadurch gekennzeichnet, daß die mechanische Einrichtung (2) aus zwei anliegenden runden, mit mehreren Löchern (7) versehenen Platten (8, 9) besteht, wobei eine (5) der Platten radial auf der inneren Oberfläche des röhrenförmigen Körpers (1) befestigt ist und die andere, mit dem mittleren Teil (6) des Kolbens (3) verbundene Platte (9) auf der ersten Platte (8) gleitet.

5. Vorrichtung nach Patentanspruch 4, dadurch gekennzeichnet, daß sie eine im mittleren Teil (6) des Kolbens (3) angebrachte Feder (10) mit verstellbarer Spannung enthält, wobei sich diese Feder unten auf dieses Teil und auf den Deckel des Kolbens stützt, um die Übereinanderlagerung der jeweiligen Löcher (5) der beiden Platten entsprechend den gewünschten Druckabfällen zu justieren.

6. Vorrichtung nach Patentanspruch 5, dadurch gekennzeichnet, daß das elastische Element (5) und der mittlere Teil (6) des Kolbens in einer an der äußeren Oberfläche des Körpers (1) befestigten und mit der Öffnung (4) in Verbindung stehenen Metallhalterung (11) liegen, wobei der mittlere Teil über einen Metallstift (12) mit der beweglichen Platte (9) verbunden ist.

7. Regelvorrichtung, dadurch gekennzeichnet, daß sie eine gemäß dem geräuschlos durchzuführenden Druckabfall bestimmte Anzahl von über die gesamte Länge des röhrenförmigen Körpers (1) verteilte Regelstufen aufweist, wobei jede Stufe eine über einen Kolben (3) gesteuerte mechanische Einrichtung (2) enthält, nach irgendeinem der vorstehenden Patentansprüche.
